# EUROPÄISCHE PATENTSCHRIFT

(11) **EP 4 122 303 B1**
(45) Veröffentlichungstag und Bekanntmachung des Hinweises auf die Patenterteilung: **25.09.2024**
(21) Anmeldenummer: 22184317.0
(22) Anmeldetag: 12.07.2022
(51) Int. Cl.: A01B 29/04, A01B 49/02, A01B 63/16, A01B 73/04

(54) **LANDWIRTSCHAFTLICHES BODENBEARBEITUNGSGERÄT**
AGRICULTURAL SOIL WORKING IMPLEMENT
APPAREIL AGRICOLE DE TRAVAIL DU SOL

(30) Priorität: 19.07.2021 DE 102021118531
(43) Veröffentlichungstag der Anmeldung: 25.01.2023
(73) Patentinhaber: Pöttinger Landtechnik GmbH, 4710 Grieskirchen (AT)
(72) Erfinder: BERGER, Thomas, 4710 Grieskirchen (AT); MEINDLHUMER, Wilhelm, 4710 Grieskirchen (AT); KIRCHMAYR, Alois, 4710 Grieskirchen (AT)
(74) Vertreter: Thoma, Michael

(56) Entgegenhaltungen:
- EP-A1- 3 434 089
- AU-B2- 702 204
- DE-A1- 102017 116 633
- US-A1- 2020 288 620

## Beschreibung

Die vorliegende Erfindung betrifft ein landwirtschaftliches Bodenbearbeitungsgerät mit zumindest einer Bodenwerkzeuggruppe, die an einem Bodenwerkzeugträger aufgehängt ist, einer Nachläufereinheit, die höhenverstellbar gelagert ist, sodass durch Höhenverstellung der Nachläufereinheit die Arbeitstiefe der Bodenwerkzeuggruppe einstellbar ist, sowie einer Vorwerkzeugeinheit, insbesondere Frontpackerwalze, die vorauslaufend zur Bodenwerkzeuggruppe angeordnet und am Bodenwerkzeugträger aufgehängt ist.

Solche landwirtschaftlichen Bodenbearbeitungsgeräte sind beispielsweise aus der Schrift DE 10 2017 116 633 A1 bekannt und werden in ähnlicher Form auch in den Schriften US 2020 / 288 620 A1, AU 702 204 B2 und EP 3 434 089 A1 beschrieben.

Bei Bodenbearbeitungsgeräten werden die Bodenbearbeitungswerkzeuge, die die Hauptbearbeitung oder zumindest einen Teil der Bodenbearbeitung übernehmen, oft mit einem Vorwerkzeug gefahren, das den Boden vorverdichten oder in anderer Weise vorbearbeiten soll, um mit den Bodenbearbeitungswerkzeugen dann das optimale Arbeitsergebnis zu erzielen. Die genannte Bodenwerkzeuggruppe kann beispielsweise um aufrechte Achsen rotierende Zinkenkreisel umfassen, oder auch Schrägscheiben oder andere Eggenwerkzeuge, Säscharscheiben oder andere Säwerkzeuge oder Grubberzinken oder Kombinationen hieraus umfassen, wobei die Bodenwerkzeuggruppe in einer oder mehreren, hintereinander angeordneten Reihen quer zur Fahrtrichtung angeordnet sein können. Als Vorwerkzeug kann eine Frontpackerwalze gefahren werden, die den Boden vor der Bodenwerkzeuggruppe vorverdichten und vergleichmäßigen, beispielsweise Erdbrocken zerkleinern und einebnen kann, wobei eine solche Frontpackerwalze beispielsweise in Form eines Reifenpackers mit einer Vielzahl an quer zur Fahrtrichtung nebeneinander angeordneten Reifen ausgebildet sein kann, wobei auch speziellere Ausbildungsformen wie gezackte Krümlerwalzen, Rohrpackerwalzen oder Stabwalzen Verwendung finden können. Also Vorwerkzeugeinheit kommen aber auch Schrägscheiben oder andere Vorwerkzeugreihen in Betracht.

Die Arbeitstiefe der Bodenwerkzeuggruppe kann über eine Höhenverstellung der Nachläufereinheit eingestellt werden, die hierzu relativ zum Maschinenrahmen und/oder zu dem Bodenwerkzeugträger höhenverstellbar gelagert ist, beispielsweise über eine Mehrgelenks-Lenkeraufhängung, über die die Nachläufereinheit in der Höhe relativ zu den Bodenwerkzeugen verstellt werden kann. Diese Nachläufereinheit kann eine Nachläuferwalze umfassen, die wiederum als Packerwalze ähnlich der beschriebenen Frontpackerwalze ausgebildet sein kann. Alternativ oder zusätzlich kann die Nachläufereinheit aber auch ein Fahrwerk umfassen, das beispielsweise für den Straßentransport abgesenkt werden kann, um die Bodenwerkzeuggruppe in eine Transportstellung mit ausreichend Bodenfreiheit ausheben zu können. In der Arbeitsstellung dient das Nachläuferfahrwerk dann der Arbeitstiefeneinstellung der Bodenwerkzeuggruppe.

Wird nun über die Nachläufereinheit die Arbeitstiefe der Bodenwerkzeuggruppe verstellt, muss die Vorläufereinheit bzw. Frontpackerwalze an die neue Arbeitstiefe der Bodenwerkzeuggruppe angepasst werden bzw. relativ zu den Bodenwerkzeugen auch in eine andere Höhenstellung gefahren werden. Dies ist an sich relativ einfach bzw. müssen keine besonderen Stellbewegungen ausgeführt werden, wenn die Frontpackerwalze an der Nachläufereinheit aufgehängt bzw. zusammen mit der Nachläufereinheit am Maschinenrahmen aufgehängt ist, sodass die Frontpackerwalze automatisch die Höhenbewegungen der Nachläufereinheit mitmacht. Wird die Nachläufereinheit verstellt, muss der Frontpacker nicht nachjustiert werden, da er sich sozusagen automatisch mit dem Nachläufer mitverstellt. Eine solche starre Anbindung des Frontpackers an die Nachläufereinheit ist jedoch in verschiedener Hinsicht nachteilig. Zum einen liegen die Frontpackerwalze und die Nachläufereinheit auf gegenüberliegenden Seiten der Bodenwerkzeuggruppe, sodass eine entsprechende Aufhängung der Frontpackerwalze eine große Distanz überspannen muss und hierdurch ein entsprechendes Gewicht mit sich bringt, um ausreichend stabil zu bauen und die entstehenden Biegebelastungen abtragen zu können. Zum anderen wird es schwierig, die Nachläufereinheit als Transportfahrwerk nutzen zu können, da in der Transportstellung an sich auch die Frontpackerwalze mit ausreichender Bodenfreiheit ausgehoben sein soll.

Um dieser Problematik zu entgehen, kann die Frontpackereinheit an den Bodenwerkzeugen bzw. dem die Bodenwerkzeuge tragenden Bodenwerkzeugträger aufgehängt sein bzw. an einem Maschinenrahmenteil, an dem auch der besagte Bodenwerkzeugträger befestigt ist. Bei einem solchen Ausbildungstypus braucht die Aufhängung der Frontpackerwalze keine großen Distanzen zu überbrücken und es kann eine kompakte, platzsparende Bauweise erzielt werden. Allerdings muss bei einer Aufhängung der Frontpackerwalze am Bodenwerkzeugträger die Frontpackerwalze nachjustiert werden, wenn die Arbeitstiefe der Bodenwerkzeuggruppe durch Höhenverstellung der Nachläufereinheit verstellt wird.

Eine solche Nachjustierung der Frontpackereinheit bei Arbeitstiefenverstellungen wird bislang im Wesentlichen entweder mechanisch oder hydraulisch bewerkstelligt. Eine mechanische Nachjustierung kann beispielsweise dadurch erfolgen, dass der Frontpacker über Verstellstangen und -hebel oder allgemein über ein Koppelgetriebe an die Fahrwerksanlenkung bzw. die höhenverstellbare Aufhängung der Nachläufereinheit angekoppelt ist, vgl. DE 10 2017 116 633 A1. Hierbei ist der Frontpacker am Bodenwerkzeugträger höhenverstellbar bzw. - schwenkbar aufgehängt, wobei über die besagten Verstellstangen bzw. -hebel die Höhenstellung gegenüber dem Bodenwerkzeugträger justiert werden kann und automatisch nachjustiert wird, wenn die Nachläufereinheit zur Arbeitstiefenverstellung höhenverstellt wird. Andererseits kann ein solches Nachjustieren der Frontpackereinheit auch hydraulisch erfolgen, insbesondere über eine beispielsweise Master-Slave-artige Anbindung eines Verstellzylinders der Frontpackereinheit an den Tiefeneinstellzylinder, der zur Einstellung der Arbeitstiefe die Nachläufereinheit höhenverstellen kann.

In beiden Fällen ist die Nachjustierung der Position der Frontpackerwalze zur Bodenwerkzeuggruppe relativ aufwändig, insbesondere weil es schwierig ist, die Höhenverstellung der Nachläufereinheit getrieblich so in eine Höhenverstellung der Frontpackerwalze abzubilden, dass in verschiedenen Arbeitstiefenstellungen der Bodenwerkzeuggruppe die Frontpackerwalze den gleichen bzw. zumindest näherungsweise vergleichbaren Bodenanpressdruck fährt. Durch Kippbewegungen und Stellwegverzerrungen bei schwenkbaren Lenkeraufhängungen kommt es zumindest bei größeren Verstellbereichen der Frontpackerwalze oft zu unterschiedlichen Anpressdrücken je nachdem, welche Arbeitstiefe für die Bodenbearbeitungswerkzeuge gefahren wird.

Zwar lassen sich die genannten Bewegungsverzerrungen und die damit einhergehenden Schwankungen im Bodenanpressdruck über den Verstellbereich vermeiden bzw. reduzieren, wenn ein komplexeres Kopplungsgetriebe zur Nachläufereinheit bzw. eine komplexere Aufhängungskinematik mit hydraulischer Ankoppelung vorgesehen wird. Dies geht jedoch oft mit einer Kollisionsproblematik einher, wenn die Frontpackereinheit zusammen mit der Bodenwerkzeuggruppe in eine aufrechte Transportposition ausgehoben werden kann, wie dies bei Maschinen mit größeren Arbeitsbreiten an sich üblich ist. Dabei sind die Bodenwerkzeuggruppe und die Frontpackereinheit über die Arbeitsbreite in mehrere Untergruppen unterteilt bzw. umfasst das Gerät Seitenflügel mit einer Bodenwerkzeuggruppe und einer vorauslaufenden Frontpackerwalze, die um eine liegende, etwa in Fahrtrichtung weisende Schwenkachse aus der abgesenkten Arbeitsstellung in eine etwa aufrechte Transportstellung verschwenkt werden können. In der aufrechten Transportstellung kommt es dann zu der genannten Kollisionsproblematik, wenn oberhalb der Frontpackerwalze bzw. des Bodenwerkzeugträgers Verstellstangen oder -hebel bzw. allgemein größere Justierelemente vorhanden sind, die beim Nachobenschwenken dann nach innen überstehen.

Hiervon ausgehend liegt der vorliegenden Erfindung die Aufgabe zugrunde, ein verbessertes landwirtschaftliches Bodenbearbeitungsgerät zu schaffen, das Nachteile des Standes der Technik vermeidet und letzteren in vorteilhafter Weise weiterbildet. Insbesondere soll mit einer kompakten, leicht bauenden Aufhängung ein auch bei größerem Verstellbereich gleichbleibender Bodenanpressdruck der Frontpackerwalze erreicht werden, ohne in der aufgeklappten Transportstellung Kollisionsprobleme durch die Frontpacker-Aufhängung zu generieren.

Erfindungsgemäß wird die genannte Aufgabe durch ein landwirtschaftliches Bodenbearbeitungsgerät gemäß Anspruch 1 gelöst. Bevorzugte Ausgestaltungen der Erfindung sind Gegenstand der abhängigen Ansprüche.

Es wird also vorgeschlagen, die Vorwerkzeugeinheit an der Bodenwerkzeuggruppe bzw. dem Bodenwerkzeugträger aufzuhängen, aber trotzdem keine Kopplung an die Nachläufereinheit vorzusehen. Um eine Anpassung an verschiedene Arbeitstiefen zu ermöglichen, wird die Vorwerkzeugeinheit lediglich elastisch auf den Boden vorgespannt und kann Höhenausgleichsbewegungen relativ zur Bodenwerkzeuggruppe selbsttätig vornehmen. Erfindungsgemäß ist die Vorwerkzeugeinheit im Arbeitsbetrieb höhenbeweglich relativ zur Bodenwerkzeuggruppe geführt und von einer Vorspanneinrichtung nach unten auf den Boden zu elastisch vorgespannt. Durch die höhenbewegliche Führung bleibt die Vorwerkzeugeinheit relativ zur Bodenwerkzeuggruppe auch im Arbeitsbetrieb beweglich und kann sich selbsttätig an verschiedene Arbeitstiefen der Bodenwerkzeuggruppe anpassen. Zusätzlich kann auch eine verbesserte Bodenanpassung erreicht werden, wenn das Bodenbearbeitungsgerät über kupiertes Gelände mit Bodenwellen fährt, wobei die Vorwerkzeugeinheit auch bei Überfahren von Bodenwellen einen definierten, gleichmäßigen Bodenanpressdruck bereitstellen kann.

Grundsätzlich wäre es möglich, die Vorwerkzeugeinheit nur zeitlich begrenzt, insbesondere während eines vorbestimmten Zeitfensters bei Verstellung der Arbeitstiefe, und/oder in einem bestimmten Betriebsmodus zu verriegeln, indem die Vorwerkzeugeinheit dann in einer festen Höhenstellung relativ zu der Bodenwerkzeuggruppe gefahren wird. Beispielsweise kann die Vorwerkzeugeinheit für eine Verstellung der Arbeitstiefe der Bodenwerkzeuge beweglich geschaltet oder für einen Arbeitsbetrieb in kupiertem Gelände mit Bodenwellen höhenbeweglich geschaltet werden/bleiben, um im Arbeitsbetrieb selbsttätig Höhenanpassbewegungen relativ zur Bodenwerkzeuggruppe vornehmen zu können. Ist andererseits eine Arbeitstiefeneinstellung der Bodenwerkzeuge abgeschlossen und/oder wird das Bodenbearbeitungsgerät bei bestimmten Bodenverhältnissen betrieben, kann in einem anderem Betriebsmodus die Höhenbeweglichkeit der Vorwerkzeugeinheit durch eine Verriegelungs- und/oder Halteeinrichtung gesperrt werden.

Die genannte Vorwerkzeugeinheit kann insbesondere eine Frontpackerwalze sein bzw. umfassen.

Die genannte Vorspanneinrichtung kann beispielsweise hydraulisch arbeitend ausgebildet sein, beispielsweise einen Vorspannzylinder umfassen, der die Frontpackerwalze bzw. Vorwerkzeugeinheit gegenüber dem Bodenwerkzeugträger oder einem Maschinenrahmenteil zum Boden hin nach unten drückt bzw. spannt und hierzu mit einem vorbestimmten, ggf. auch variabel einstellbaren Druck beaufschlagt wird. Die Druckbeaufschlagung kann beispielsweise aus einem Druckspeicher erfolgen und/oder auch von einem Hydraulikanschluss her bereitgestellt werden, der beispielsweise von einem Schlepper speisbar ist, an den das Bodenbearbeitungsgerät anbaubar ist. Durch Verstellen des genannten Druckspeichers und/oder Verstellen des vom Schlepper her anliegenden Drucks, was beispielsweise über ein Drucksteuerventil erfolgen könnte, kann der Bodenanpressdruck der Frontpackerwalze bzw. Vorwerkzeugeinheit in gewünschter Weise eingestellt werden.

Bei einer solchen hydraulischen Vorspanneinrichtung könnte die genannte Sperrfunktion zum Einfrieren einer bestimmten Höhenstellung der Frontpackerwalze bzw. Vorwerkzeugeinheit relativ zu den Bodenwerkzeugen beispielsweise durch eine Absperrvorrichtung zum Absperren des Vorspannzylinders bzw. der Zu- und Abläufe der Vorspanneinrichtung erzielt werden.

Die Vorspanneinrichtung kann aber auch mechanisch ausgebildet sein, insbesondere eine mechanische Federeinrichtung umfassen, beispielsweise in Form eines längenverstellbaren Federbeins, mittels dessen die Frontpackerwalze bzw. Vorwerkzeugeinheit auf den Boden zu spannbar ist. Eine solche mechanische Vorspanneinrichtung kann ggf. auch mit einer hydraulischen Vorspanneinrichtung kombiniert werden.

Die elastisch vorspannbare Frontpackerwalze bzw. Vorwerkzeugeinheit kann insbesondere auch an Seitenflügeln bzw. Maschinenteilen vorgesehen sein, die aus einer abgesenkten Arbeitsstellung in eine ausgehobene Vorgewende- und/oder Transportstellung verbringbar sind, beispielsweise um eine liegende, insbesondere etwa in Fahrtrichtung weisende Schwenkachse in eine aufrechte Transportstellung schwenkbar sind. Insbesondere bei großen Arbeitsbreiten kann eine Bodenwerkzeugreihe in mehrere Bodenwerkzeuggruppen unterteilt sein, von denen zumindest eine oder rechts und links auskragende Bodenwerkzeuggruppen an einem schwenkbar gelagerten Bodenwerkzeugträger aufgehängt sind, der nach oben klappbar ist, um die Maschinenbreite beispielsweise für den Straßentransport verkleinern zu können.

Vorteilhafterweise können dabei die Bodenwerkzeuggruppe und die vorauslaufende Frontpackerwalze bzw. Vorwerkzeugeinheit gemeinsam in die Vorgewende- und/oder Transportstellung ausgehoben werden. Unabhängig hiervon kann beim Ausheben der Frontpackerwalze bzw. Vorwerkzeugeinheit in die Vorgewende- und/oder Transportstellung die Vorspanneinrichtung genutzt werden, um die Frontpackerwalze bzw. Vorwerkzeugeinheit in eine kollisionsvermindernde Stellung zu bringen. Die Frontpackerwalze bzw. Vorwerkzeugeinheit kann beim Ausheben in die Vorgewende- und/oder Transportstellung beweglich bleiben, so dass die Vorspanneinrichtung die Frontpackerwalze bzw. Vorwerkzeugeinheit zunächst nach unten bzw. dann in der aufgeschwenkten, insbesondere etwa aufrecht stehenden Transportstellung nach außen treibt. Hierdurch wird Platz zur Innenseite der Maschinen hin geschaffen, wo oft andere Maschinenrahmenteile oder Komponenten wie beispielsweise ein Saatguttank bei Sä- und Bodenbearbeitungskombinationen vorgesehen ist. Vorteilhafterweise kann die Frontpackerwalze zumindest beim Ausheben in die Transportstellung frei beweglich geschaltet werden, um von der Vorspanneinrichtung in eine abgesenkte und/oder nach außen verfahrene Endstellung getrieben zu werden.

In der ausgehobenen, insbesondere etwa aufrechten Transportstellung ist es auch von Vorteil, wenn die Frontpackerwalze ohne Koppelung zu der Nachläufereinheit bzw. zu der Aufhängung der Nachläufereinheit ausgebildet ist, da hierdurch zum einen der Aushubvorgang in die Vorgewende- und/oder Transportstellung vereinfacht wird und zum anderen auch die Kollisionsfreiheit zu innenliegenden Maschinenteilen nochmals reduziert werden kann, da die Aufhängung der Frontpackerwalze besonders kompakt bauend ausgebildet sein kann.

In Weiterbildung der Erfindung kann die Frontpackerwalze schwenkbar um eine Schwenkachse ausgebildet sein, die sich in der abgesenkten Arbeitsstellung liegend quer zur Fahrtrichtung erstrecken kann. Insbesondere kann die Aufhängung der Frontpackerwalze eine Schwinge bzw. Schwingenanordnung umfassen, die um die genannte Packerschwenkachse schwenkbar an dem Bodenwerkzeugträger oder einem damit verbundenen Zwischenträger angeordnet sein kann. Die Schwingenanordnung kann sich beispielsweise von der genannten Schwenkachse schräg nach unten und in Fahrtrichtung nach vorne erstrecken, um eine kompakte Anordnung zu erzielen. Insbesondere kann die Packerschwenkachse etwa im Bereich zwischen Frontpackerwalze und Bodenwerkzeuggruppe angeordnet sein, wobei die Schwenkachse bei Betrachtung der abgesenkten Arbeitsstellung oberhalb der Rotationsachse der Packerräder und/oder oberhalb der Bodenwerkzeuge angeordnet sein kann, insbesondere etwa auf Höhe des Bodenwerkzeugträgers.

Die genannte Schwingenanordnung kann von der Vorspanneinrichtung mit einer Vorspannkraft beaufschlagt werden, wobei sich die Vorspanneinrichtung einerseits an der Schwingenanordnung bzw. einer damit drehfest verbundenen Schwingenachse oder einem Schwingenlagerhebel sowie andererseits an einem maschinenrahmenfesten oder bodenwerkzeugträgerfesten Gegenlager abstützen kann.

Vorteilhafterweise kann die Vorspanneinrichtung einen zumindest näherungsweise fahrtrichtungsparallel ausgerichteten Vorspannzylinder umfassen.

Die Erfindung wird nachfolgend anhand eines bevorzugten Ausführungsbeispiels und zugehörigen Zeichnungen näher erläutert. In den Zeichnungen zeigen:

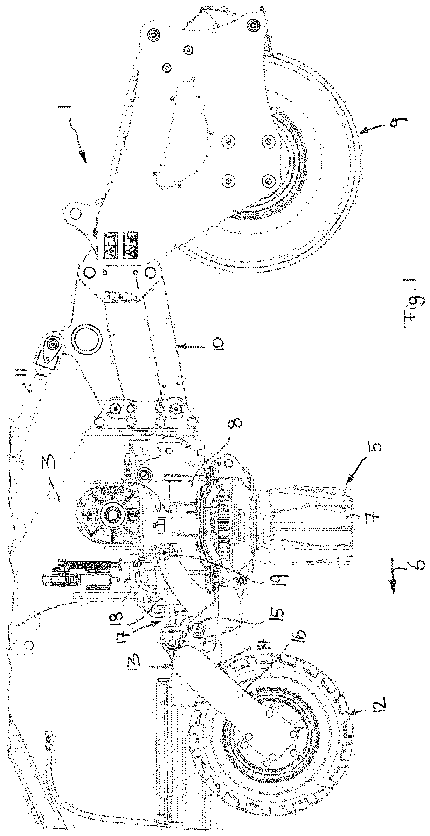

- Fig. 1:: eine ausschnittsweise Seitenansicht eines landwirtschaftlichen Bodenbearbeitungsgeräts nach einer vorteilhaften Ausführung der Erfindung, die die Bodenwerkzeuggruppe sowie die der Bodenwerkzeuggruppe hinterherlaufenden Nachläufereinheit und die der Bodenwerkzeuggruppe vorauslaufende Frontpackerwalze sowie deren Aufhängungssysteme zeigt,

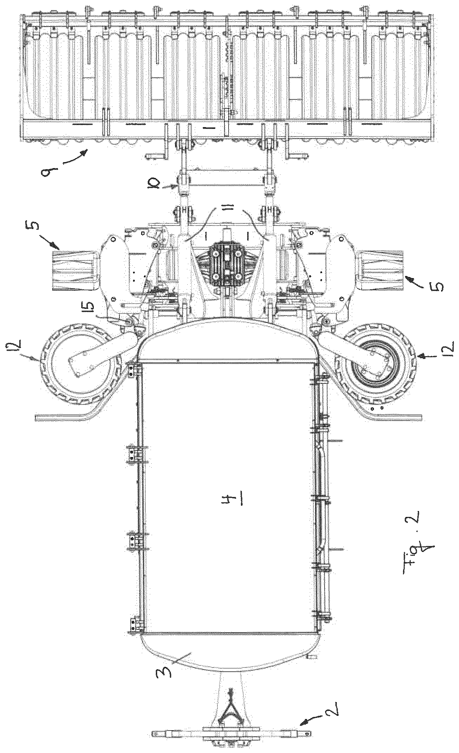

- Fig. 2:: eine Draufsicht auf das Bodenbearbeitungsgerät aus Fig. 1, wobei die seitlichen Bodenwerkzeuggruppen und die zugeordneten Frontpackerwalzen in der ausgehobenen, etwa aufrechten Transportstellung gezeigt sind, wobei die Frontpackerwalzen in ihren von der Vorspanneinrichtung nach außen bewegten, kollisionsmindernden Stellungen gezeigt sind, und

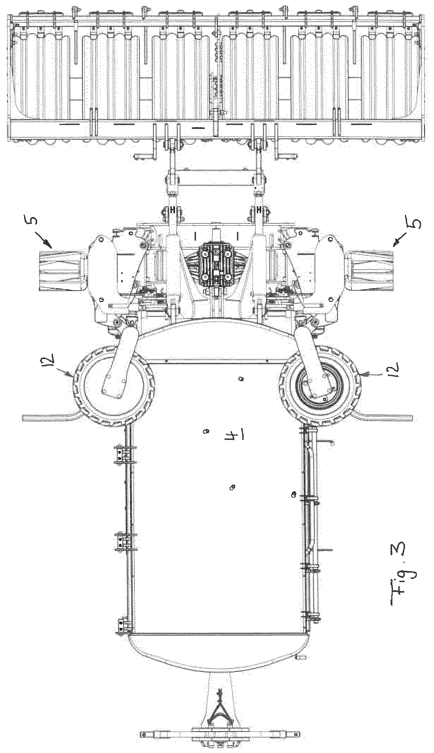

- Fig. 3:: eine vergleichsweise Draufsicht auf das Bodenbearbeitungsgerät ähnlich Fig. 2, wobei die nach oben geschwenkten Frontpackerwalzen in einer nach innen verfahrenen Vergleichsstellung gezeigt sind.

Wie die Figuren 1 und 2 zeigen, kann das landwirtschaftliche Bodenbearbeitungsgerät 1 als Anbaugerät zum Anbau an einen Schlepper ausgebildet sein und eine hierfür geeignete Anbauvorrichtung 2 umfassen, die mit einem Maschinenrahmen 3 verbunden ist.

Unabhängig von der Ausbildung als Anbaugerät kann der Maschinenrahmen 3 eine oder mehrere Maschinenkomponenten wie beispielsweise einen Saatguttank 4 tragen, insbesondere wenn das Gerät 1 als Bodenbearbeitungs-Sämaschinen-Kombination ausgebildet ist.

Das Bodenbearbeitungsgerät 1 weist zumindest eine Bodenwerkzeuggruppe 5 auf, die in einer Reihe quer zur Fahrtrichtung 6 nebeneinander angeordnete Bodenwerkzeuge 7 umfassen kann, beispielsweise in Form von Zinkenkreisel, die in der Arbeitsstellung um aufrechte Kreiselachsen rotierend antreibbar sein können, vgl. Fig. 1 und 2.

Die Bodenwerkzeuggruppe 5 kann starr oder verstellbar an einem Bodenwerkzeugträger 8 aufgehängt sein, der sich quer in der abgesenkten Arbeitsstellung liegend quer zur Fahrtrichtung erstrecken kann.

Wie Fig. 2 verdeutlicht, kann die Bodenwerkzeugreihe dabei in mehrere Bodenwerkzeuggruppen und zugehörige Bodenwerkzeugträger unterteilt sein, die relativ zueinander beweglich sein können. Insbesondere kann das Bodenbearbeitungsgerät 1 seitlich rechts und links auskragende Seitenflügel aufweisen, die jeweils eine Bodenwerkzeuggruppe 5 umfassen und aus der abgesenkten Arbeitsstellung, vgl. Fig. 1, in eine ausgehobene, insbesondere etwa aufrechte Vorgewende- und/oder Transportstellung verschwenkt werden können, wobei eine Schwenkachse 9 liegend etwa fahrtrichtungsparallel angeordnet sein kann.

Der Bodenwerkzeuggruppe 5 nachlaufend ist eine Nachläufereinheit 9 vorgesehen, die eine Nachläuferwalze sein kann, beispielsweise in Form einer Packerradwalze, und/oder auch ein Transportfahrwerk bilden kann.

Die Nachläufereinheit 9 ist relativ zum Maschinenrahmen 3 und damit auch relativ zum Bodenwerkzeugträger 8 höhenverstellbar aufgehängt, um für den Arbeitsbetrieb die Arbeitstiefe der Bodenwerkzeuggruppe 5 einstellen zu können und ggf. auch für den Straßentransport die gesamte Bodenwerkzeugeinheit ausreichend weit mit Bodenfreiheit ausheben zu können.

Die Aufhängung 10 der Nachläufereinheit 9 kann beispielsweise eine mehrgelenkige Lenkeraufhängung beispielsweise in Form einer Parallelogramm-Lenkeraufhängung sein, vgl. Fig. 1. Unabhängig von der Ausbildung der Aufhängung 10 kann ein Höhenverstellaktor 11 beispielsweise in Form eines Hydraulikzylinders vorgesehen sein, um die Nachläufereinheit 9 in der Höhe und damit die Arbeitstiefe der Bodenwerkzeuggruppe 5 einstellen zu können.

Der Bodenwerkzeuggruppe 5 vorauslaufend ist eine Frontpackerwalze 12 vorgesehen, die an dem Bodenwerkzeugträger 8 bzw. einem Maschinenrahmenteil, an dem auch der genannte Bodenwerkzeugträger 8 gelagert ist, aufgehängt ist. Die Aufhängung 13 kann dabei mit der zugehörigen Bodenwerkzeuggruppe 5 soweit zusammengefasst sein, dass die seitlichen Bodenwerkzeuggruppen zusammen mit der vorauslaufenden Frontpackerwalze 12 in der beschriebenen Weise aus der abgesenkten Arbeitsstellung in die aufrechte Transportstellung aufgeschwenkt werden können, vgl. Fig. 2.

Die genannte Aufhängung 13 der Frontpackerwalze 12 ist dabei höhenbeweglich ausgebildet, so dass die Frontpackerwalze 12 relativ zur Bodenwerkzeuggruppe 5 höhenbeweglich ist, um bei verschieden eingestellten Arbeitstiefen der Bodenwerkzeuggruppe 5 ein Aufstehen auf der Bodenfläche vor der Bodenwerkzeuggruppe 5 sicherzustellen.

Wie Fig. 1 zeigt, kann die Aufhängung 13 der Frontpackerwalze 12 eine Schwingenanordnung 14 umfassen, die eine oder mehrere von einer Schwenkachse 15 auskragende Schwingen 16 aufweisen kann, die die Raddrehachsen tragen. Die genannte Schwingenschwenkachse 15 kann sich zwischen der Bodenwerkzeuggruppe 5 und der Frontpackerwalze 12 erstrecken, wobei sich die genannte Schwenkachse 15 in der abgesenkten Arbeitsstellung liegend quer zur Fahrtrichtung erstrecken kann. Wie Fig. 1 zeigt, kann die Schwenkachse 15 oberhalb der Bodenwerkzeuge etwa auf Höhe des Bodenwerkzeugträgers 8 angeordnet sein, beispielsweise in Fahrtrichtung am vorderen Randabschnitt des genannten Bodenwerkzeugträgers 8.

Die Schwingen 16 können sich von der Schwenkachse 15 aus in der Arbeitsstellung schräg nach vorne und schräg nach unten erstrecken, vgl. Fig. 1.

Durch Auf- und Niederwippen der Schwingen 16 wird die Frontpackerwalze 12 relativ zur Bodenwerkzeuggruppe 5 höhenverstellt.

Die Aufhängung 13 bzw. die Verstellbarkeit der Frontpackerwalze 12 ist dabei vorteilhafterweise nicht an die Aufhängung 10 bzw. die Höhenverstellung der Nachläufereinheit 9 angekoppelt, sondern lässt unabhängig von Höhenbewegungen der Nachläufereinheit 9 Verstellbewegungen der Frontpackerwalze 12 zu.

Wie Fig. 1 zeigt, wird die Frontpackerwalze 12 durch eine Vorspanneinrichtung 17 in eine Richtung vorgespannt, wobei die Vorspannrichtung in der abgesenkten Arbeitsstellung nach unten zum Boden hin weist und in der ausgehobenen Transportstellung, vgl. Fig. 2, nach außen weist und die Frontpackerwalze 12 nach außen treibt.

Die Vorspanneinrichtung 17 kann hydraulisch oder mechanisch ausgebildet sein, wobei in den Figuren eine hydraulische Ausbildung mit einem Vorspannzylinder 18 gezeigt ist, der über einen Druckanschluss des Bodenbearbeitungsgeräts 1 von einem nicht gezeigten Schlepper her mit Druck beaufschlagt werden kann und/oder auch aus einem Druckspeicher gespeist bzw. beaufschlagt werden kann.

Die Vorspanneinrichtung 17 greift einerseits an der Schwingenanordnung 14 und andererseits an einem maschinenrahmenfesten bzw. bodenwerkzeugträgerfesten Gegenlager 19 an, so dass die Vorspannkraft der Vorspanneinrichtung 17 die Frontpackerwalze 12 nach unten auf den Boden treibt und eine vorbestimmte Bodenanpresskraft bereitstellt.

Die Frontpackerwalze 12 kann im Arbeitsbetrieb höhenbeweglich geführt bzw. verstellbar bleiben. Dies erlaubt einerseits Bodenanpassbewegungen beim Überfahren von Bodenwellen. Andererseits passt sich die Frontpackerwalze 12 in ihrer Höhenstellung relativ zur Bodenwerkzeuggruppe 5 selbsttätig an, wenn die Arbeitstiefe der Bodenwerkzeuggruppe 5 durch Höhenverstellung der Nachläufereinheit 9 verändert wird.

Zudem kann eine Kollisionsproblematik verringert werden, wenn die Frontpackerwalze 12 in die ausgehobene Transportstellung bewegt wird, da sich die Frontpackerwalze 12 durch die Vorspanneinrichtung 17 selbsttätig nach außen bewegt und somit das Kollisionspotential zu innenliegenden Maschinenkomponenten wie dem genannten Saatguttank 4 vermindert, vgl. Fig. 2 im Vergleich zur Fig. 3.

## Patentansprüche

1. Landwirtschaftliches Bodenbearbeitungsgerät, mit zumindest einer Bodenwerkzeuggruppe (5), die an einem Bodenwerkzeugträger (8) aufgehängt ist, einer Nachläufereinheit (9), die höhenverstellbar gelagert ist, so dass durch Höhenverstellung der Nachläufereinheit (9) die Arbeitstiefe der Bodenwerkzeuggruppe (5) einstellbar ist, sowie einer Vorwerkzeugeinheit, insbesondere Frontpackerwalze (12), die vorauslaufend zur Bodenwerkzeuggruppe (5) angeordnet und am Bodenwerkzeugträger (8) oder einem damit verbundenen Rahmenteil aufgehängt ist, wobei die Vorwerkzeugeinheit (12) im Arbeitsbetrieb höhenbeweglich relativ zu der Bodenwerkzeuggruppe (5) geführt ist, **dadurch gekennzeichnet, dass** die Vorwerkzeugeinheit (12) im Arbeitsbetrieb von einer Vorspanneinrichtung (17) nach unten auf den Boden zu elastisch vorgespannt ist, wobei die Vorwerkzeugeinheit (12) kopplungsfrei von der Nachläufereinheit (9) unabhängig aufgehängt ist.

2. Landwirtschaftliches Bodenbearbeitungsgerät nach dem vorhergehenden Anspruch, wobei die Vorwerkzeugeinheit (12) um eine liegende, zumindest näherungsweise fahrtrichtungsparallele Schwenkachse zwischen einer abgesenkten Arbeitsstellung und einer ausgehobenen Transport- und/oder Vorgewendestellung verschwenkbar ist, wobei die Vorwerkzeugeinheit (12) in der ausgehobenen Transport- und/oder Vorgewendestellung von der Vorspanneinrichtung (17) in eine nach außen verlagerte Endstellung getrieben ist.

3. Landwirtschaftliches Bodenbearbeitungsgerät nach dem vorhergehenden Anspruch, wobei die Vorwerkzeugeinheit (12) zusammen mit der Bodenwerkzeuggruppe (5) um die genannte Schwenkachse in die Transport- und/oder Vorgewendestellung aushebbar ist und sich beim Ausheben in die genannte Transport- und/oder Vorgewendestellung selbsttätig relativ zu der Bodenwerkzeuggruppe (5) in die nach außen verlagerte Endstellung verlagert.

4. Landwirtschaftliches Bodenbearbeitungsgerät nach einem der vorhergehenden Ansprüche, wobei die Vorwerkzeugeinheit (12) unabhängig von der Nachläufereinheit (9) relativ zur Bodenwerkzeuggruppe (5) höhenverstellbar ist.

5. Landwirtschaftliches Bodenbearbeitungsgerät nach einem der vorhergehenden Ansprüche, wobei die Vorspanneinrichtung (17) dazu ausgebildet ist und/oder einen Betriebsmodus aufweist, bei einer Verstellung der Arbeitstiefe der Bodenwerkzeuggruppe (5) durch eine Höhenverstellung der Nachläufereinheit (9) einen Höhenanpassbewegung der Vorwerkzeugeinheit (12) relativ zur Bodenwerkzeuggruppe (5) zuzulassen.

6. Landwirtschaftliches Bodenbearbeitungsgerät nach einem der vorhergehenden Ansprüche, wobei eine Aufhängung (13) der Vorwerkzeugeinheit (12) eine Schwingenanordnung (14) aufweist, die eine oder mehrere Schwingen (16) umfasst, die um eine in der Arbeitsstellung liegende, sich quer zur Fahrtrichtung (6) erstreckende Schwenkachse (15) schwenkbar relativ zum Bodenwerkzeugträger (8) sind, wobei die Vorspanneinrichtung (17) die Schwingenanordnung (14) mit einer Vorspannkraft und/oder einem Vorspannmoment beaufschlagt, die/das in der Arbeitsstellung die Schwingenanordnung (14) nach unten auf den Boden zu treibt.

7. Landwirtschaftliches Bodenbearbeitungsgerät nach einem der vorhergehenden Ansprüche, wobei die Vorspanneinrichtung (17) dazu ausgebildet ist, über den gesamten Höhenverstellbereich der Vorwerkzeugeinheit (12) eine zumindest etwa gleichbleibende Bodenanpresskraft bereitzustellen.

8. Landwirtschaftliches Bodenbearbeitungsgerät nach einem der vorhergehenden Ansprüche, wobei die Vorspanneinrichtung (17) hydraulisch ausgebildet ist und zumindest einen Druckmittelzylinder aufweist, der mit einem vorzugsweise einstellbaren Vorspanndruck beaufschlagbar ist.

9. Landwirtschaftliches Bodenbearbeitungsgerät nach dem vorhergehenden Anspruch, wobei der zumindest eine Vorspannzylinder mit seiner Zylinderlängsachse zumindest näherungsweise fahrtrichtungsparallel ausgerichtet ist und/oder in der Arbeitsposition der Vorwerkzeugeinheit (12) liegend oberhalb der Vorwerkzeugeinheit (12) und/oder zwischen der Vorwerkzeugeinheit (12) und der Bodenwerkzeuggruppe (5) angeordnet ist.

10. Landwirtschaftliches Bodenbearbeitungsgerät nach einem der vorhergehenden Ansprüche, wobei die Vorspanneinrichtung (17) mechanisch ausgebildet ist und zumindest eine mechanische Federeinrichtung umfasst.

11. Landwirtschaftliches Bodenbearbeitungsgerät nach einem der vorhergehenden Ansprüche, wobei eine Verriegelungseinrichtung zum Verriegeln der Vorwerkzeugeinheit (12) in einer Höhenstellung relativ zur Bodenwerkzeuggruppe (5) vorgesehen ist, wobei die Verriegelungseinrichtung zumindest für das Verstellen der Arbeitstiefe der Bodenwerkzeuggruppe (5) entriegelbar ist.

## Claims

1. Agricultural soil tillage implement, comprising at least one soil tool group (5), which is suspended from a soil tool carrier (8), a following unit (9), which is mounted to be height-adjustable such that, by adjusting the height of the following unit (9), the working depth of the soil tool group (5) can be set, and a pre-working tool unit, in particular a front packer roller (12), which is arranged to run in front of the soil tool group (5) and is suspended from the soil tool carrier (8) or a frame part connected thereto, wherein the pre-working tool unit (12) is guided so as to be vertically movable relative to the soil tool group (5) during working operation, **characterised in that** the pre-working tool unit (12) is resiliently preloaded downwards towards the ground by a preloading apparatus (17) during working operation, wherein the pre-working tool unit (12) is suspended independently of the following unit (9) without coupling.

2. Agricultural soil tillage implement according to the preceding claim, wherein the pre-working tool unit (12) is pivotable about a horizontal pivot axis, which is at least approximately in parallel with the travel direction, between a lowered working position and a raised transport and/or headland position, wherein the pre-working tool unit (12), in the transport and/or headland position, is driven by the preloading apparatus (17) into an outwardly displaced final position.

3. Agricultural soil tillage implement according to the preceding claim, wherein the pre-working tool unit (12) can be raised together with the soil tool group (5) about said pivot axis into the transport and/or headland position and, when being raised into said transport and/or headland position, is displaced automatically relative to the soil tool group (5) into the outwardly displaced final position.

4. Agricultural soil tillage implement according to any of the preceding claims, wherein the pre-working tool unit (12) is height-adjustable relative to the soil tool group (5) independently of the following unit (9).

5. Agricultural soil tillage implement according to any of the preceding claims, wherein the preloading apparatus (17) is configured to and/or has an operating mode so as to allow for a height-adjusting movement of the pre-working tool unit (12) relative to the soil tool group (5) during an adjustment of the working depth of the soil tool group (5) by means of a height adjustment of the following unit (9).

6. Agricultural soil tillage implement according to any of the preceding claims, wherein a suspension (13) of the pre-working tool unit (12) comprises a swingarm assembly (14), which comprises one or more swingarms (16), which are pivotable relative to the soil tool carrier (8) about a pivot axis (15) which extends transversely to the travel direction (6) and is horizontal in the working position, wherein the preloading apparatus (17) applies a preloading force and/or a preloading moment to the swingarm assembly (14) which drives the swingarm assembly (14) downwards onto the ground in the working position.

7. Agricultural soil tillage implement according to any of the preceding claims, wherein the preloading apparatus (17) is configured to provide an at least approximately constant ground contact force over the entire height-adjustment range of the pre-working tool unit (12).

8. Agricultural soil tillage implement according to any of the preceding claims, wherein the preloading apparatus (17) is configured to be hydraulic and comprises at least one pressure medium cylinder, to which a preferably settable preloading pressure can be applied.

9. Agricultural soil tillage implement according to the preceding claim, wherein the at least one preloading cylinder is oriented with its longitudinal cylinder axis at least approximately in parallel with the travel direction and/or is arranged horizontally above the pre-working tool unit (12) and/or between the pre-working tool unit (12) and the soil tool group (5) in the working position of the pre-working tool unit (12).

10. Agricultural soil tillage implement according to any of the preceding claims, wherein the preloading apparatus (17) is configured to be mechanical and comprises at least one mechanical spring apparatus.

11. Agricultural soil tillage implement according to any of the preceding claims, wherein a locking apparatus is provided for locking the pre-working tool unit (12) in a vertical position relative to the soil tool group (5), wherein the locking apparatus can be unlocked at least for adjusting the working depth of the soil tool group (5).

## Revendications

1. Appareil de travail du sol agricole, avec au moins un groupe d'outils de sol (5), qui est suspendu sur un support d'outil de sol (8), une unité traînée (9), qui est montée de manière ajustable en hauteur de telle sorte que la profondeur de travail du groupe d'outils de sol (5) peut être réglée par l'ajustement en hauteur de l'unité traînée (9), ainsi qu'une unité formant outil avant, en particulier un cylindre compacteur avant (12), qui est disposé à l'avant par rapport au groupe d'outils de sol (5) et est suspendu sur le support d'outil de sol (8) ou une partie de cadre reliée à celui-ci, dans lequel l'unité formant outil avant (12) est guidée, dans le mode de travail, de manière mobile en hauteur par rapport au groupe d'outils de sol (5), **caractérisé en ce que** l'unité formant outil avant (12) est précontrainte de manière élastique, dans le mode de travail, par un système de précontrainte (17) vers le bas en direction du sol, dans lequel l'unité formant outil avant (12) est suspendue indépendamment de l'unité traînée (9) sans couplage.

2. Appareil de travail du sol agricole selon la revendication précédente, dans lequel l'unité formant outil avant (12) peut être pivoté entre une position de travail abaissée et une position de transport et/ou de tournière relevée autour d'un axe de pivotement horizontal au moins approximativement parallèle à la direction de déplacement, dans lequel l'unité formant outil avant (12) est poussée par le système de précontrainte (17) dans une position finale déplacée vers l'extérieur dans la position de transport et/ou de tournière relevée.

3. Appareil de travail du sol agricole selon la revendication précédente, dans lequel l'unité formant outil avant (12) peut être relevée dans la position de transport et/ou de tournière autour dudit axe de pivotement conjointement avec le groupe d'outils de sol (5) et se déplace dans la position finale déplacée vers l'extérieur de manière autonome par rapport au groupe d'outils de sol (5) lors du relèvement dans ladite position de transport et/ou de tournière.

4. Appareil de travail du sol agricole selon l'une quelconque des revendications précédentes, dans lequel l'unité formant outil avant (12) peut être ajustée en hauteur par rapport au groupe d'outils de sol (5) indépendamment de l'unité traînée (9).

5. Appareil de travail du sol agricole selon l'une quelconque des revendications précédentes, dans lequel le système de précontrainte (17) est réalisé et/ou présente un mode de fonctionnement pour autoriser un déplacement d'adaptation en hauteur de l'unité formant outil avant (12) par rapport au groupe d'outils de sol (5) lors d'un ajustement de la profondeur de travail du groupe d'outils de sol (5) par un ajustement en hauteur de l'unité traînée (9).

6. Appareil de travail du sol agricole selon l'une quelconque des revendications précédentes, dans lequel une suspension (13) de l'unité formant outil avant (12) présente un ensemble oscillant (14), qui comprend un ou plusieurs bras oscillants (16), qui peuvent être pivotés par rapport au support d'outil de sol (8) autour d'un axe de pivotement (15) situé dans la position de travail, s'étendant de manière transversale par rapport à la direction de déplacement (6), dans lequel le système de précontrainte (17) soumet l'ensemble oscillant (14) à l'action d'une force de précontrainte et/ou d'un couple de précontrainte, qui pousse, dans la position de travail, l'ensemble oscillant (14) vers le bas en direction du sol.

7. Appareil de travail du sol agricole selon l'une quelconque des revendications précédentes, dans lequel le système de précontrainte (17) est réalisé pour fournir une force de pression de sol au moins à peu près homogène sur la totalité de la zone d'ajustement en hauteur de l'unité formant outil avant (12).

8. Appareil de travail du sol agricole selon l'une quelconque des revendications précédentes, dans lequel le système de précontrainte (17) est réalisé de manière hydraulique et présente au moins un cylindre à agent sous pression, qui peut être soumis à l'action d'une pression de précontrainte de préférence réglable.

9. Appareil de travail du sol agricole selon la revendication précédente, dans lequel l'au moins un cylindre de précontrainte est orienté avec son axe longitudinal de cylindre au moins approximativement de manière parallèle à la direction de déplacement et/ou est disposé, situé dans la position de travail de l'unité formant outil avant (12), au-dessus de l'unité formant outil avant (12) et/ou entre l'unité formant outil avant (12) et le groupe d'outils de sol (5).

10. Appareil de travail du sol agricole selon l'une quelconque des revendications précédentes, dans lequel le système de précontrainte (17) est réalisé de manière mécanique et comprend au moins un système de ressort mécanique.

11. Appareil de travail du sol agricole selon l'une quelconque des revendications précédentes, dans lequel un système de verrouillage est prévu pour verrouiller l'unité formant outil avant (12) dans une position en hauteur par rapport au groupe d'outils de sol (5), dans lequel le système de verrouillage peut être déverrouillé au moins pour l'ajustement de la profondeur de travail du groupe d'outils de sol (5).
